# EUROPEAN PATENT APPLICATION

(11) **EP 4 831 680 A1**
(43) Date of publication of application: **28.10.2026**
(21) Application number: 26172985.9
(22) Date of filing: 17.04.2026
(51) Int. Cl.: G01S 7/00, G01N 29/265, G01S 7/539, G01S 15/42, G01S 15/86, G01S 15/87, G01S 15/89, G01S 7/56, G01S 15/931

(54) **ROAD ANOMALIES DETECTION SYSTEM**

(30) Priority: 23.04.2025 IT 202500009144
(71) Applicant: Easyvia s.r.l., 82027 Pontelandolfo (BN) (IT)
(72) Inventor: GUERRERA, ALESSANDRO, 20090 Trezzano Sul Naviglio (MI) (IT)
(74) Representative: Ripamonti, Enrico

(57) **Abstract**

A road anomalies detection system used in monitoring road conditions and in detecting anomalies (potholes, cracks, deformations, surface degradation, etc.), comprising a central processing unit for determining the position and the orientation, a plurality of sensor-units placed in communication with said central processing unit and with each sensor unit comprising means for measuring the distance from the surface.

## Description

The present invention relates to a road anomalies detection system.

More particularly, the present invention relates to a road anomalies detection system used in monitoring road conditions and in detecting anomalies (potholes, cracks, deformations, surface degradation, etc.).

As known, when referring to road infrastructures, besides the construction and aesthetic characteristics thereof, there should also be taken into great account the traffic flow and upkeeping the same thanks to a daily and accurate maintenance.

The monitoring of the road conditions and the detection of anomalies are not marginal or optional activities, but they represent a central element in the sustainable and efficient management of the road assets.

Roads deteriorate over time due to the vehicle traffic (especially heavy-duty), harsh weather conditions, construction processes that are not always optimal.

Timely detecting potholes, cracks, depressions, deformations or concealed structural problems means averting accidents (protecting the safety of the users), reducing costs (acting with targeted actions before the damage deteriorates), optimising public resources (programming maintenance instead of catching up) and lastly, increasing the useful life cycle of the road pavements.

There are known methods and technologies, from the simplest to the most conventional and smartest ones, which allow to monitor the condition of the roads with ever-increasing level of precision, automation and detail.

Prior art systems and methods include manual visual inspection according to which specialised technicians travel the road by foot or by car, visually detecting surface anomalies (cracks, potholes, disintegrations).

These are cost-effective methods which do not require complex and sophisticated equipment, but they are subject to the subjectivity and variability among operators, with the risk of errors/omissions and long times and low territorial coverage.

Other prior art methods are based on evaluations with static or dynamic profilometers using tools which measure the surface evenness and the macro/micro-texture, with said tools which can be fitted on vehicles or used by hand; static profilometers carry out point-point measurements (for example with a contact profilometer), while dynamic profilometers comprise vehicles provided with laser sensors and GPS (for example, Road Surface Profilers (RSPs). However, such objective and repeatable measurement, which are also adapted for the preventive maintenance, reveal significant drawbacks related to the fact that they require trained operators and calibrated tools, and they entail high costs.

Another prior art method uses deflectometers which simulate the load of a heavy axle, measuring the deflection of the road surface so as to evaluate the load-bearing capacity of the layers beneath (base layer, foundation).

However, such methods can be used only with the road closed or traffic slowed and they require time for each point of measurement and, furthermore, it is a slow and invasive method for the traffic.

Other prior art methods comprise in situ drilling and tests such as destructive analysis and, in particular, they comprise collecting samples to evaluate the thickness, composition, state of the materials.

However, such methods reveal significant drawbacks linked to the fact that the tests are invasive, expensive and require long performance times.

Other prior art methods use smartphones and, more in particular, smartphones of the citizens or vehicles provided with GPS, accelerometer, gyroscope with the purpose of collecting data in real time from multiple users to detect vibrations, potholes, slow down.

These are cost-effective methods, functional to a continuous as well as real time monitoring. However, they reveal drawbacks linked to low precision (for example, they cannot distinguish a pothole from a manhole), the detections made are affected by noise and the like, more particularly, they do not measure the dimensions of the anomalies and for some anomalies (such as for example potholes) they require entering thereinto with the wheels, otherwise they are not detected.

Other prior art methods are based on the use of artificial intelligence with neural networks which analyse images from dashcams, drones or fixed sensors to automate the recognition and classification of visual anomalies.

However, also these methods reveal significant drawbacks linked to a need of a large trained dataset and complexity linked to the management of particular cases and anomalies. In addition, these are methods that provide two-dimensional evaluations which do not allow to obtain an accurate estimate of the volumes and they are subjected to a high likelihood of "false positives" given that they are statistical methods. Other prior art methods are based on the use of autonomous vehicles and inspection drones which explore the difficult or dangerous areas and carry out the evaluations.

However, also these solutions reveal significant drawbacks linked to the fact that these are non-scalable solutions and applicable in limited areas. In addition, they reveal drawbacks linked to the presence of extremely limiting aeronautical regulations, difficulty/complexity in interpreting data and high costs.

The object of the present invention is to overcome the drawbacks described above.

More particularly, an object of the present invention is to provide an anomalies detection system used in monitoring road conditions and in detecting anomalies (potholes, cracks, deformations, surface degradation, etc.).

Even more particularly, an object of the present invention is to provide a road anomalies detection system adapted to allow the three-dimensional reconstruction of an anomaly starting from multiple detections and calculating the main characteristics of such anomaly (for example, the shape, size, depth and the like).

A further object of the present invention is to provide a system for detecting anomalies which minimises the need for manual inspections therefore optimising maintenance operations and reducing the related costs.

A further object of the present invention is to provide a system for detecting anomalies which allows to schedule maintenance operations more effectively so as to reduce inconveniences to road users to the minimum.

A further object of the present invention is to provide a system for detecting anomalies with optimised and greater precision with respect to conventional methods which use sensors which can be installed on common vehicles.

A further object of the present invention is to provide a system which can be easily installed on common vehicles without the need for special vehicles.

A further object of the present invention is to provide the users with a road anomalies detection system adapted to ensure a high reliability and long-term durability and also such to be cost-effective and easy to implement.

These and other objects are attained by the invention having the characteristics according to claim 1.

According to the invention, herein provided is a road anomalies detection system used in monitoring road conditions and in detecting anomalies (potholes, cracks, deformations, surface degradation, etc.), comprising a central processing unit for determining the position and the orientation, a plurality of sensor-units placed in communication with said central processing unit and with each sensor unit comprising means for measuring the distance from the surface.

Advantageous embodiments of the invention are outlined by the dependent claims.

The functional characteristics of the road anomalies detection system of the present invention will be clearer from the following detailed description in which reference will be made to the attached drawings illustrate a preferred and non-limiting embodiment thereof and wherein:
figure 1 schematically shows the functional logic of the road anomalies detection system of the present invention;
figure 2 shows a block flow diagram of a component of the system of the invention.

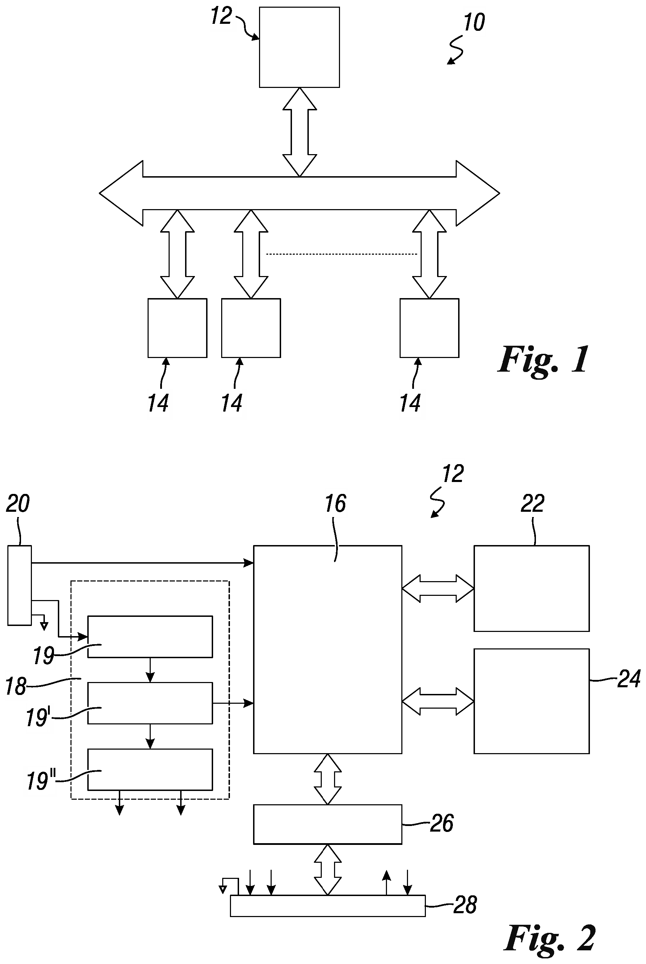

With reference to the figures mentioned above, the road anomalies detection system of the present invention, indicated in its entirety with 10 in figure 1, comprises a main circuit board or motherboard 12 and a plurality of sensor-boards 14 which are placed in data communication with the motherboard 12.

The main circuit board or motherboard 12 comprises several elements defined by the main processing unit, a memory, GPS module, LTE modem, protection stages, filtering, an accelerometer, a gyroscope and communication means towards the sensor-boards 14.

Each of the sensor-boards 14 house an ultrasonic sonar device, a specific microcontroller, sensor-boards for managing the sonar device and the communication interface. More particularly, and with reference to figure 2, the main circuit board or motherboard 12 comprises:
- a microcontroller 16 which forms the main processing unit which controls all operations as better shown hereinafter;
- a supply unit 18 with a 12-24 volt-input (block 20) adapted to supply energy to the circuit and which comprises a first component 19 for protection against overvoltage and bursts (or voltage peaks) to safeguard the electronic components, a second component 19' for protection against overvoltage, undervoltage and polarity inversion (OV, UV Inversion) and a third component 19'' defining a DC/DC regulator which converts the input voltage into lower voltage required for the microcontroller 16 and other components;
- a block 22 comprising an LTE (Long Term Evolution) modem adapted to provide connectivity for the transmission of data and a GPS (Global Positioning System) module adapted to receive satellite signals for geographical positioning;
- a block 24 which comprises an accelerometer (preferably 3D) and a gyroscope (preferably 3D) for measuring the acceleration and the angular velocity and to provide information on the orientation, movement and vibrations;
- a communication interface 26 for transmitting data;
- a connector 28 for the communication interface 26. Each sensor board 14 uses the sonar device to emit ultrasonic pulses and measure the reflected time-of-flight therefore calculating the distance to the underlying surface (the road surface to be analysed).

The sensor boards for the management of the sonar device and the communication interface present on the sensor boards 14 process the sound signals received by means of the sonar device so as to improve the measurement precision and reduce the noise and subsequently send the data thus filtered to the specific microcontroller on board the individual sensor board which manages the communication with the main circuit board or motherboard 12 transmitting the acquired and processed distance information.

The main circuit board or motherboard 12 receives data relating to the distance of the underlying surface (the road surface to be analysed) from each sensor board 14 and synchronises them with the data coming from the accelerometer and from the gyroscope (block 24) and from the GPS (block 22), with the accelerometer and the gyroscope which provide information on the accelerations and on the inclination of the system 10 and with the GPS which provides data relating to the position and to the velocity thereof.

The microcontroller 16 of the main circuit board or motherboard 12 receives the distance, inclination, position data coming from the gyroscope and accelerometer and combines them to reconstruct in real time the shape of the underlying road surface.

The main circuit board or motherboard 12 and the sensor-boards 14 are arranged on board a vehicle which travels along the road surfaces.

The final data, which include the shape of the reconstructed road surface, the position, and the other relevant parameters mentioned above are transmitted to the remote (or cloud) central control system and stored for subsequent analysis. The cloud remote central control system (not shown), upon collecting the final data, provides for a system for cleaning the same to remove errors, inconsistencies, noises and the like, with said step potentially comprising:
- a removal of duplicates, that is the removal of redundant data to reduce noise and improve the quality of the analysis;
- a correction of errors, that is an identification and correction of abnormal data or measurement errors (for example, off-scale values or missing samples);
- a normalisation, that is a homogenisation of the unit of measurement and a formatting of data to guarantee consistency;
- a filtering of the signals by applying filtering algorithms to reduce the noise of the data collected by the sensors (the sensor-boards 14) such as for example the removal of abnormal peaks in measuring the distances.

Subsequently to the step for cleaning data, there is a step for consolidating and enriching data in which said clean data are consolidated (for example, multiple detection of road anomalies is consolidated in a single anomaly) and enriched to make them more useful and richer in information (for example geographical data).

The consolidation step is followed by a step for providing services functional to digitising the process for managing detected anomalies; more particularly, the processed data become a base for remote or cloud services which support a monitoring, a smart planning of the interventions with a virtual assistant, a cost estimate, a tracking of repairs and a prediction of new interventions that may be required. Such step comprises:
- displaying, with the data which can be presented through an interactive graphic interface, geospatial maps and analysis tools, with the users who can inspect the digitally reconstructed surface, monitoring road conditions in real time, analysing records relating to road anomalies and interventions carried out;
- reporting, that is an automatic generation of detailed reports functional to providing in-depth analysis of the road conditions, with key information to support operating and strategic information for the maintenance and management of infrastructures;

- displaying notifications and/or alarms functional to warning the users in the event of anomalies, critical deterioration of the road surface or conditions that require urgent interventions;
- estimating the costs, that is an automatic calculation of the intervention costs based on historical data and predictive models;
- planning the interventions, optimised for a minimisation of impacts on the road traffic and operational maximisation;
- predictive monitoring, that is the analysis of the data so as to allow to predict any deteriorations of the road surface and suggest predictive interventions.

The platform according to the described system has the "asset management" functionality (or management of assets and resources) which allow to communicate with the remote devices for further calibrations/updates of the algorithms and manage the "anomaly detection"/predictive maintenance functionalities on the sensors and motherboard.

In the light of the above, there are clear advantages attained by the road anomalies detection system of the present invention.

The road anomalies detection system advantageously allows to obtain a three-dimensional reconstruction of a road anomaly starting from multiple detections and highly accurately calculate the main characteristics of such anomaly (for example, the shape, dimensions, depth and the like).

A further advantage of the present invention lies in the fact that by automating the detection of the anomalies, the system minimises the need for manual inspections, therefore optimising maintenance operations and reducing the relevant costs.

A further advantage of the detection system of the invention lies in the fact that, due to the combination of historical data and predictive analysis, it allows to define an effective planning of the interventions, reducing inconveniences for the road users to the minimum.

A further advantage of the system of the invention lies in the fact that it allows to identify, measure and classify road anomalies with superior precision with respect to that of conventional methods.

A further advantage of the system of the invention lies in the fact that the precision of the datum allows to automatically suggest the optimal interventions to be carried out so as to save time for the individuals designated to plan interventions and ensure a greater timeliness in the intervention with resulting cost-effectiveness; furthermore, the cloud solution is capable of easily scaling given that it does not manage "complex" data such as video/image reconstructions but rather "light" data (point clouds). Though the invention has been described above with particular reference to an embodiment thereof provided solely by way of non-limiting example, numerous modifications and variants shall be clear to a man skilled in the art in the light of the description above. Thus, the present invention protects all modifications and variants that fall within the scope of protection of the claims that follow.

## Claims

1. A road anomalies detection system used in monitoring road conditions and in detecting anomalies such as potholes, cracks, deformations, surface degradation and the like, comprising a central processing unit comprising means for determining the position and orientation, a plurality of sensor-units placed in communication with the central processing unit, **characterised in that** said central processing unit consists of a main circuit board or motherboard (12), the sensor units consist of sensor boards (14), wherein each sensor board (14) comprises an ultrasonic sonar device configured to emit ultrasonic pulses and determine a distance from the road surface based on the time-of-flight, a specific microcontroller for processing signals of said sonar device, the sensor boards (14) being configured to locally carry out a filtering of the sonar signals comprising at least one noise reduction and an elimination of abnormal values before the transmission of the distance data to the motherboard (12) and before the synchronisation with data coming from an accelerometer, from a gyroscope and from a GPS module and for transmitting distance data to the motherboard (12), the motherboard (12) being configured to temporally synchronise the distance data coming from the sensor board (14) with data coming from an accelerometer, a gyroscope and a GPS module and to combine said synchronised data so as to reconstruct the shape of the road surface and determine geometric characteristics of the detected anomalies.

2. The system according to claim 1, **characterised in that** the main circuit board or motherboard (12) comprises a microcontroller (16), a supply unit (18), a unit or block (22) comprising an LTE (Long Term Evolution) modem and a GPS (Global Positioning System) module, a unit or block (24) comprising the accelerometer and the gyroscope, a communication interface (26) for transmitting data, the microcontroller (16) being configured to carry out the temporal synchronisation and the combination of the data coming from the sensor boards (14).

3. The system according to claim 1, **characterised in that** the sensor-boards (14) comprise a specific microcontroller configured to carry out a digital filtering of the sonar signals comprising at least one noise reduction and an elimination of abnormal values before transmitting the data to the main circuit board or motherboard (12).

4. The system according to claim 2, **characterised in that** the accelerometer and the gyroscope of the unit or block (24) are of the 3D type, to provide orientation data used in the synchronisation and combination of data.

5. The system according to the preceding claims, **characterised in that** the remote (or cloud) central control system is configured to receive data from the main circuit board or motherboard (12) and carry out operations for processing data comprising at least one cleaning and one filtering of the data so as to improve the accuracy of the information relating to the road anomalies.

6. A method for detecting road anomalies, comprising the steps of:
- acquiring road surface distance data by means of a plurality of sensor-boards (14) comprising ultrasonic sonar devices;
- local filtering of the distance data by means of specific microcontrollers of the sensor boards (14), comprising at least one noise reduction and an elimination of abnormal values;
- transmission of the filtered distance data to a main circuit board or motherboard (12);
- temporal synchronisation of the distance data with data coming from an accelerometer, a gyroscope and a GPS module;
- combination of synchronised data for reconstructing a three-dimensional representation of the road surface and determining the geometric characteristics of the anomalies;
- transmission of the processed data to a remote or cloud central control system.

7. The method of claim 6, **characterised in that** the remote central control system carries out data processing operations comprising at least one cleaning and one filtering of the data to improve the accuracy of the detection of anomalies, a consolidation and an enrichment of said data for providing services functional to the digitisation of the process for managing the detected anomalies and to a predictive monitoring functional to predicting any deteriorations of the road surface and suggestions of predictive actions.
